# EUROPÄISCHE PATENTSCHRIFT

(11) **EP 2 250 054 B1**
(45) Veröffentlichungstag und Bekanntmachung des Hinweises auf die Patenterteilung: **10.08.2011**
(21) Anmeldenummer: 08872876.1
(22) Anmeldetag: 26.11.2008
(51) Int. Cl.: B60T 1/10, B60T 7/04, B60T 13/52, B60T 13/66

(54) **VORRICHTUNG UND VERFAHREN ZUM ERKENNEN EINER BREMSBETÄTIGUNG**
DEVICE AND METHOD FOR DETECTING A BRAKE ACTUATION
DISPOSITIF ET PROCÉDÉ DE DÉTECTION DE L'ACTIONNEMENT D'UN FREIN

(30) Priorität: 28.02.2008 DE 102008011606
(43) Veröffentlichungstag der Anmeldung: 17.11.2010
(73) Patentinhaber: Robert Bosch GmbH, 70442 Stuttgart (DE)
(72) Erfinder: GONZALEZ ROMERO, Rafael, 74360 Ilsfeld-Auenstein (DE); KAESTNER, Frank, 74321 Bietigheim-Bissingen (DE); BUSSMANN, Otmar, 74232 Abstatt (DE)
(86) Internationale Anmeldenummer: PCT/EP2008/066186
(87) Internationale Veröffentlichungsnummer: WO 2009/106170

(56) Entgegenhaltungen:
- WO-A-2005/073045
- DE-A1- 10 046 317
- DE-A1- 19 514 591
- DE-A1-102005 054 614

## Beschreibung

### Stand der Technik

Die Erfindung betrifft ein Verfahren zum Detektieren einer Bremsbetätigung gemäß Patentanspruch 1,sowie eine Bremsanlage für ein Fahrzeug gemäß Patentanspruch 2

In Hybrid-Fahrzeugen wird die elektrische Maschine auch dazu genutzt, die bei einem Bremsvorgang frei werdende kinetische Energie in elektrische Energie zu wandeln und im Bordnetz zu speichern (so genannte Rekuperation). Die so erzeugte elektrische Leistung steht somit für einen nachfolgenden Beschleunigungsvorgang oder für den Betrieb elektrischer Verbraucher zur Verfügung.

Der Fahrer-Bremswunsch wird bei diesen Fahrzeugen üblicherweise mittels eines Pedalsensors am Fuß-Bremspedal bzw. im Bremskraftverstärker aufgenommen. Als Pedalsensor werden meist Kraft- oder Wegsensoren eingesetzt. Derartige Pedalsensoren sind jedoch relativ teuer.

Aus der DE 195 14 591 A1 ist eine Bremsanlage für Kraftfahrzeuge bekannt, in welcher eine indirekte Ermittlung des Betätigungskraft eines fremdansteuerbaren pneumatischen Bremskraftverstärkers erfolgt. Zu diesem Zweck sind ein Drucksensor, der einen in einem dem Bremskraftverstärker nachgeschalteten Hauptbremszylinder eingesteuerten hydraulischen Druck umfasst, sowie ein Differenzdrucksensor vorgesehen, der den im Gehäuse des Bremskraftverstärkers herrschenden pneumatischen Differenzdruck sensiert. Aus beiden Sensorsignalen berechnet ein elektronischer Regler die an einem Betätigungspedal wirkende Betätigungskraft.

Aus der DE 100 46 317 A1 ist eine hydraulische Bremsvorrichtung für Fahrzeuge bekannt. Die hydraulische Bremsvorrichtung mit einer Unterdruckverstärkungsvorrichtung und einer hydraulischen Verstärkungsvorrichtung hat eine Ventilvorrichtung zum Hemmen des Verstärkungsvorgangs für den Hauptzylinderkolben durch die hydraulische Verstärkungsvorrichtung, bis die Unterdruckverstärkungsvorrichtung ihre Verstärkungsgrenze erreicht, und Ermöglichen des Verstärkungsvorgangs für den Hauptzylinderkolben durch die hydraulische Verstärkungsvorrichtung, wenn die Unterdruckverstärkungsvorrichtung ihre Verstärkungsgrenze überschreitet, und einen Erfassungssensors zum Erfassen zumindest eines aus dem Betriebszustand der Unterdruckverstärkungsvorrichtung oder dem Bremspedalbetätigungszustand, wobei auf der Grundlage des erfassten Ausgangs durch die Erfassungseinrichtung eine Pumpenvorrichtung für die Zufuhr des Verstärkungsdrucks durch die hydraulische Verstärkungsvorrichtung gesteuert wird, um angetrieben zu werden.

### Offenbarung der Erfindung

Es ist daher die Aufgabe der vorliegenden Erfindung, den Fahrer-Bremswunsch mittels einer einfacheren und kostengünstigeren Sensorik zu erfassen. Darüber hinaus soll die erfindungsgemäße Sensorik dazu genutzt werden, das Fahrzeug bereits im Leerweg des Bremspedals, rein regenerativ zu bremsen.

Gelöst wird diese Aufgabe gemäß der Erfindung durch die im Patenanspruch 1 oder 2 angegebenen Merkmale. Weitere Ausgestaltungen der Erfindung sind Gegenstand von Unteransprüchen.

Ein wesentlicher Aspekt der Erfindung besteht darin, bei Fahrzeugen, die einen Unterdruck-Bremskraftverstärker aufweisen, den Fahrer-Bremswunsch dadurch zu erfassen, dass der in der Arbeitskammer und/oder Vakuumkammer des Bremskraftverstärkers herrschende Druck gemessen und aus dem gemessen Druck oder einer Druckdifferenz eine Bremspedalbetätigung (zumindest qualitativ) erkannt wird.

Es hat sich gezeigt, dass sich der Kammerdruck bereits im Leerweg des Bremspedals ändert, also noch bevor sich ein Bremsdruck im Hauptbremszylinder aufgebaut hat. Somit ist es bereits im Leerweg des Bremspedals möglich, eine Pedalbetätigung zu erkennen. Die elektrische Maschine kann daher schon im Leerweg des Bremspedals dazu genutzt werden, elektrische Leistung zu erzeugen und das Fahrzeug ausschließlich generatorisch zu bremsen.

Der gemessene Druck wird von einem Steuergerät weiterverarbeitet. Das Steuergerät ist mit der elektrischen Maschine bzw. einer Steuer- oder Regeleinheit der elektrischen Maschine verbunden und steuert diese in Abhängigkeit vom gemessenen Druck bzw. der Druckdifferenz.

Erfindungsgemäß wird die elektrische Maschine, sobald eine Pedalbetätigung erkannt wurde, zunächst mit einer ersten (z. B. mittleren) generatorischen Leistung betrieben, und die generatorische Leistung mit zunehmender Pedalbetätigung weiter erhöht.

Eine erfindungsgemäße Bremsanlage für ein Fahrzeug umfasst wenigstens eine hydraulische Reibbremse mit einem Unterdruck-Bremskraftverstärker, sowie eine elektrische Maschine, die im Generatorbetrieb ein vorgegebenes Bremsmoment ausübt. Außerdem ist eine Sensorik zum Messen des in der Arbeitskammer und/oder in der Vakuumkammer herrschenden Drucks, sowie eine Einrichtung, wie z.B. ein Steuergerät, vorgesehen, die aufgrund des gemessenen Drucks oder einer Druckdifferenz eine Pedalbetätigung erkennt. Im günstigsten Fall umfasst die Bremsanlage keinen separaten Pedalsensor.

Gemäß einer bevorzugten Ausführungsform der Erfindung sind in beiden Kammern des Unterdruck-Bremskraftverstärkers Drucksensoren angeordnet. Die Pedalbetätigung wird in diesem Fall vorzugsweise auf Grundlage des Differenzdrucks ermittelt.

Kurze Beschreibung der Zeichnungen

Die Erfindung wird nachstehend anhand der beigefügten Zeichnungen beispielhaft näher erläutert. Es zeigen:
Fig. 1 eine schematische Darstellung einer KFZ-Bremsanlage mit einer hydraulischen Bremse und einem Generator;
Fig. 2a-2c den Verlauf verschiedener Drücke und Signale bei einem Bremsvorgang; und
Fig. 3 den Anteil der hydraulischen Betriebsbremse und des Generators an der Verzögerung des Fahrzeugs.

### Ausführungsformen der Erfindung

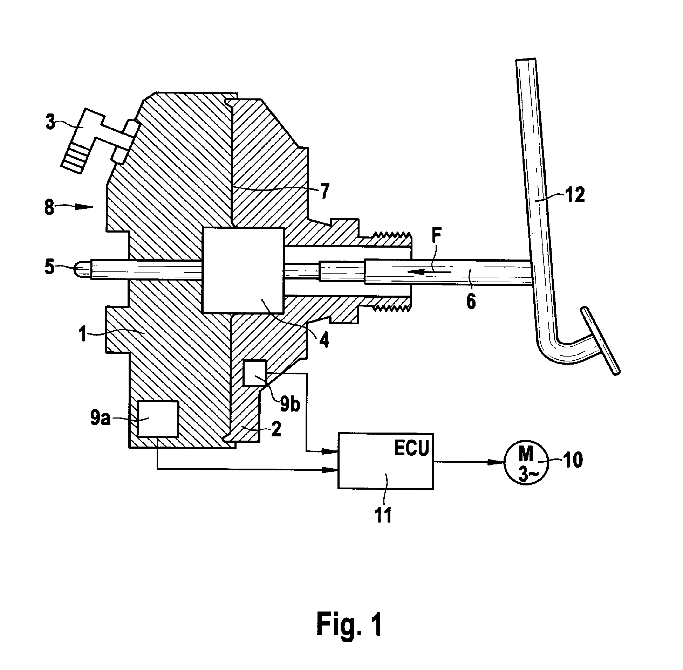

Fig. 1 zeigt eine schematische Darstellung einer KFZ-Bremsanlage mit einem hydraulischen Bremssystem (Komponenten 8,12) und einer elektrischen Maschine 10, die im Generatorbetrieb ein vorgegebenes Bremsmoment ausübt. Die hydraulische Bremse umfasst einen Unterdruck-Bremskraftverstärker 8 (UBKV), der eine Arbeitskammer 2 und eine Vakuumkammer 1 mit einem Unterdruckanschluss 3 umfasst. Zwischen den beiden Kammern 1,2 ist eine Membran 7 angeordnet. Am Unterdruckanschluss 3 der Vakuumkammer 1 ist eine Unterdruckquelle (nicht gezeigt) angeschlossen, die z.B. vom Verbrennungsmotor angetrieben wird und in der Vakuumkammer 1 einen vorgegebenen Unterdruck erzeugt.

Im Zentralbereich des UBKV 8 ist ferner ein Doppelventil 4 angeordnet, das zwei Funktionen erfüllt, nämlich a) die Arbeitskammer 2 von der Vakuumkammer 1 zu trennen oder die beiden Kammern 1,2 miteinander zu verbinden und b) die Arbeitskammer 2 zu belüften oder von der Umgebungsluft zu trennen.

Im ungebremsten Zustand ist die Verbindung zwischen der Vakuumkammer 1 und der Arbeitskammer 2 offen. In beiden Kammern 1,2 herrscht somit der gleiche Unterdruck. Bei einer Betätigung des Fuß-Bremspedals 12 werden die beiden Kammern 1,2 voneinander getrennt und die Arbeitskammer 2 von außen belüftet.

Abhängig von der über die Bremsstange 6 ausgeübten Bremskraft F stellt sich ein Druckunterschied zwischen den beiden Kammern 1,2 ein. Die aus der Druckdifferenz resultierende Kraft auf die Arbeitsmembran 7 verstärkt dabei die Bremskraft F. Nach dem Lösen der Kraft F wird die Belüftung mit Umgebungsluft unterbrochen und das Kammerventil 4 wieder geöffnet. Dadurch werden beiden Kammern 1,2 von der Unterdruckquelle mit Unterdruck beaufschlagt.

Zum Detektieren einer Pedalbetätigung des Fuß-Bremspedals 12 sind hier zwei Drucksensoren 9a,9b vorgesehen. Der Sensor 9a ist in der Vakuumkammer 1 und der Sensor 9b in der Arbeitskammer 2 angeordnet. Die Sensorsignale werden von einem Steuergerät 11 ausgewertet. Ein im Steuergerät 11 hinterlegter Algorithmus kann eine Betätigung des Bremspedals 12 je nach Ausführungsform, entweder basierend auf einem der Drucksignale, oder basierend auf einem Differenzdruck erkennen.

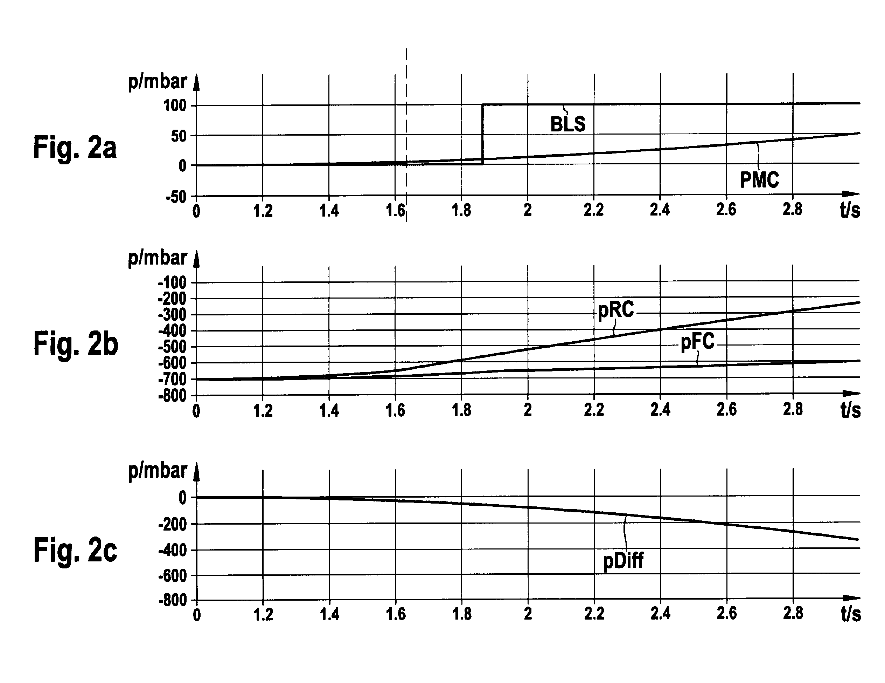

Fig. 2a-2c zeigen den Druckverlauf in den beiden Kammern 1,2 bei einem Bremsvorgang, sowie den Druck im Hauptbremszylinder der hydraulischen Bremsanlage.
Fig. 2a zeigt den Druckverlauf pMC im Hauptbremszylinder während eines Bremsvorgangs. Das Bremspedal 12 wird dabei, ausgehend vom Zeitpunkt t=0 s, zunehmend betätigt. Wie zu erkennen ist, baut sich ab etwa 1,6 s ein Druck im Hauptbremszylinder auf (siehe gestrichelte Linie). Die Reibbremse wird ab diesem Zeitpunkt aktiv. Der Pedalweg vor diesem Punkt wird dabei als "Leerweg" bezeichnet. Ab dem Zeitpunkt von etwa 1,9 s wird das Signal BLS des Bremslichtschalters aktiv.
Fig. 2b zeigt den Verlauf des Arbeitskammer- pRC und Vakuumkammerdrucks pFC (RC: rear chamber, FC: front chamber). Wie zu erkennen ist, verändert sich der Druck in beiden Kammern 1,2 bereits im Leerweg des Bremspedals 12. Im vorliegenden Beispiel zeigt sich ein Anstieg des Kammerdrucks bereits ab etwa 1,4 s. Das Steuergerät 11 kann somit anhand des Kammerdrucks pRC oder pFC oder anhand einer Druckdifferenz, wie sie in Fig. 2c dargestellt ist, eine Betätigung des Bremspedals bereits im Leerweg detektieren. Wegen der größeren Empfindlichkeit der Signale pRC und des Differenzsignals pDiff sind diese Signale für die Erkennung am besten geeignet. Die elektrische Maschine 10 kann somit bereits im Leerweg dazu genutzt werden, das Fahrzeug zu verzögern.

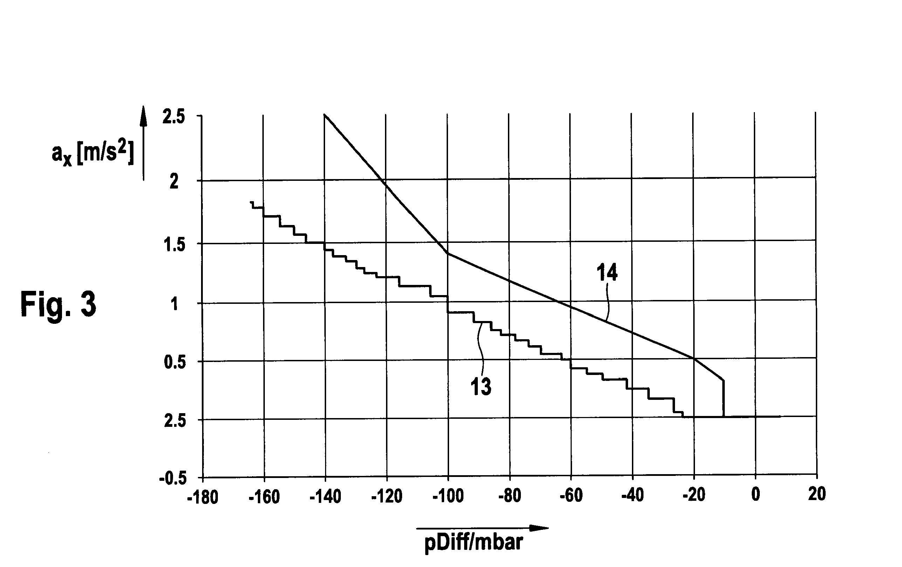

Fig. 3 zeigt den Anteil der hydraulischen Betriebsbremse und des Generators 10 an der Verzögerung des Fahrzeugs während eines Bremsvorgangs. Die Kennlinie 13 bezeichnet dabei die Verzögerung durch die Betriebsbremse und die Kennlinie 14 die zusätzliche Verzögerung durch das Bremsmoment des Generators 10. Im Bereich zwischen 0 und -20 mbar Differenzdruck bewegt sich das Bremspedal 12 im Leerweg, d.h. ab etwa -20 mbar setzt die Wirkung der Reibbremse ein (siehe Kennlinie 13).

Im vorliegenden Ausführungsbeispiel wird eine Pedalbetätigung bei etwa -10 mbar Bremsdruck erkannt. Ab diesem Zeitpunkt wird die elektrische Maschine 10 derart angesteuert, dass sie ein bestimmtes Bremsmoment oder eine vorgegebene mittlere elektrische Leistung erzeugt. Mit zunehmendem Differenzdruck wird die elektrische Maschine entsprechend stärker genutzt. Die Ansteuerung der elektrischen Maschine 10 erfolgt durch ein Steuergerät 11 (siehe Fig. 1).

## Patentansprüche

1. Verfahren zum Bremsen eines Fahrzeugs, das eine mittels Bremspedal (12) betätigte Bremsanlage mit einem Unterdruck-Bremskraftverstärker (8) sowie eine elektrische Maschine (10) aufweist, die im Generatorbetrieb ein Bremsmoment ausübt, wobei eine Betätigung des Bremspedals (12) detektiert wird, und die elektrische Maschine, falls eine Pedalbetätigung erkannt wurde, im Leerweg des Bremspedals (12) generatorisch betrieben wird, um das Fahrzeug zu bremsen und elektrische Leistung zu erzeugen, wobei der Unterdruck-Bremskraftverstärker (8) eine Arbeitskammer (2) und eine Vakuumkammer (1) aufweist, wobei der in der Arbeitskammer (2) und/oder der Vakuumkammer (1) herrschende Druck (pRC, pFC) gemessen und auf Grundlage des gemessenen Drucks oder einer Druckdifferenz (pDiff) eine Pedalbetätigung erkannt wird, wobei der Kammerdruck bereits im Leerweg des Bremspedals (12) gemessen wird, noch bevor sich in der Bremsanlage ein Bremsdruck aufgebaut hat.

2. Bremsanlage für ein Fahrzeug, mit einem Unterdruck-Bremskraftverstärker (8), der eine Arbeitskammer (2) und eine Vakuumkammer (1) aufweist, wobei die Bremsanlage mittels eines Bremspedals (12) betätigt wird, wobei eine Sensorik (9) zum Messen des in der Arbeitskammer (2) und/oder in der Vakuumkammer (1) herrschenden Drucks vorgesehen ist, sowie eine Einrichtung (11), die aus dem gemessenen Druck (pRC, pFC) oder einer Druckdifferenz (pDiff) eine Betätigung des Bremspedals (12) wenigstens qualitativ erkennt, wobei die Bremsanlage eine elektrische Maschine (10) aufweist, die im Generatorbetrieb ein Bremsmoment ausübt, wobei eine Betätigung des Bremspedals (12) detektiert wird, und die elektrische Maschine, falls eine Pedalbetätigung erkannt wurde, im Leerweg des Bremspedals (12) generatorisch betrieben wird, um das Fahrzeug zu bremsen und elektrische Leistung zu erzeugen, wobei der Kammerdruck bereits im Leerweg des Bremspedals (12) gemessen wird, noch bevor sich in der Bremsanlage ein Bremsdruck aufgebaut hat.

3. Bremsanlage nach Anspruch 2, **dadurch gekennzeichnet, dass** kein separater Pedalsensor vorgesehen ist.

4. Bremsanlage nach Anspruch 2 oder 3, **dadurch gekennzeichnet, dass** sowohl in der Arbeitskammer (2) als auch in der Vakuumkammer (1) ein Drucksensor (9) vorgesehen ist.

## Claims

1. Method for braking a vehicle which has a brake system actuated by means of a brake pedal (12), with a vacuum-type brake booster (8), and also an electric machine (10) which, operating as a generator, exerts a braking torque, actuating the brake pedal (12) being detected, and, if pedal actuation has been recognized, the electric machine being operated as a generator during the idle travel of the brake pedal (12), in order to brake the vehicle and generate electrical power, the vacuum-type brake booster (8) having a working chamber (2) and a vacuum chamber (1), the pressure (pRC, pFC) which prevails in the working chamber (2) and/or the vacuum chamber (1) being measured, and pedal actuation being recognized on the basis of the measured pressure or a pressure difference (pDiff), the chamber pressure being measured as early as during the idle travel of the brake pedal (12), even before a brake pressure has built up in the brake system.

2. Brake system for a vehicle, with a vacuum-type brake booster (8) which has a working chamber (2) and a vacuum chamber (1), the brake system being actuated by means of a brake pedal (12), sensor means (9) being provided for measuring the pressure prevailing in the working chamber (2) and/or in the vacuum chamber (1), and also a device (11) which, from the measured pressure (pRC, pFC) or a pressure difference (pDiff), recognizes actuation of the brake pedal (12) at least qualitatively, the brake system having an electric machine (10) which, operating as a generator, exerts a braking torque, actuation of the brake pedal (12) being detected, and, if pedal actuation has been recognized, the electric machine being operated as a generator during the idle travel of the brake pedal (12), in order to brake the vehicle and generate electrical power, the chamber pressure being measured as early as during the idle travel of the brake pedal (12), even before a brake pressure has built up in the brake system.

3. Brake system according to Claim 2, **characterized in that** no separate pedal sensor is provided.

4. Brake system according to Claim 2 or 3, **characterized in that** a pressure sensor (9) is provided both in the working chamber (2) and in the vacuum chamber (1).

## Revendications

1. Procédé pour freiner un véhicule, qui présente une installation de freinage actionnée au moyen d'une pédale de frein (12) avec un amplificateur de force de freinage à dépression (8) ainsi qu'un moteur électrique (10) qui exerce, en mode générateur, un couple de freinage, un actionnement de la pédale de frein (12) étant détecté, et le moteur électrique, lorsqu'un actionnement de la pédale a été détecté, fonctionnant en mode générateur dans la course à vide de la pédale de frein (12) afin de freiner le véhicule et de produire une puissance électrique, l'amplificateur de force de freinage à dépression (8) présentant une chambre de travail (2) et une chambre à vide (1), la pression (pRC, pFC) régnant dans la chambre de travail (2) et/ou la chambre à vide (1) étant mesurée et sur la base de la pression mesurée ou d'une différence de pression (pDiff), un actionnement de la pédale étant reconnu, la pression dans la chambre étant mesurée déjà dans la course à vide de la pédale de frein (12), et encore avant qu'une pression de freinage se soit créée dans l'installation de freinage.

2. Installation de freinage pour un véhicule, comprenant un amplificateur de force de freinage à dépression (8), qui présente une chambre de travail (2) et une chambre à vide (1), l'installation de freinage étant actionnée au moyen d'une pédale de frein (12), un système de capteur (9) pour la mesure de la pression régnant dans la chambre de travail (2) et/ou dans la chambre à vide (1) étant prévu, et un dispositif (11) qui reconnaît, à partir de la pression mesurée (pRC, pFC) ou d'une différence de pression (pDiff), un actionnement de la pédale de frein (12) au moins de manière qualitative, l'installation de freinage présentant un moteur électrique (10) qui exerce un couple en mode générateur, un actionnement de la pédale de frein (12) étant détecté et le moteur électrique, lorsqu'un actionnement de la pédale a été détecté, fonctionnant en mode générateur dans la course à vide de la pédale de frein (12), afin de freiner le véhicule et de produire une puissance électrique, la pression dans la chambre étant mesurée déjà dans la course à vide de la pédale de frein (12), et encore avant qu'une pression de freinage se soit créée dans l'installation de freinage.

3. Installation de freinage selon la revendication 2, **caractérisée en ce qu'**il n'est prévu aucun capteur de pédale séparé.

4. Installation de freinage selon la revendication 2 ou 3, **caractérisée en ce qu'**un capteur de pression (9) est disposé à la fois dans la chambre de travail (2) et dans la chambre à vide (1).
